# FASCICULE DE BREVET EUROPEEN

(11) **EP 0 689 894 B1**
(45) Date de publication et mention de la délivrance du brevet: **07.05.1997**
(21) Numéro de dépôt: 95401493.2
(22) Date de dépôt: 23.06.1995
(51) Int. Cl.: B23K 1/00, B01D 29/11

(54) **Procédé de fixation par brasage d'un corps métallique poreux sur une pièce métallique et application à la fabrication d'un filtre**
Verfahren-Vorrichtung zum Löten eines porösen metallischen Körpers auf einem metallischen Werkstück, und dafür hergestellter Filter
Method and apparatus for brazing a porous metallic body on a metallic piece, and manufactured filter

(30) Priorité: 27.06.1994 FR 9407872
(43) Date de publication de la demande: 03.01.1996
(73) Titulaire: COMPAGNIE GENERALE DES MATIERES NUCLEAIRES, F-78140 Velizy Villacoublay (FR)
(72) Inventeur: Piolain, Gérard, F-50130 Octeville (FR); Schultz, Jean Claude, F-50120 Equeurdreville (FR)
(74) Mandataire: Poulin, Gérard

(56) Documents cités:
- EP-A- 0 370 849
- US-A- 5 098 454

## Description

L'invention concerne de façon générale un procédé permettant de fixer un corps métallique poreux sur une pièce métallique. En outre, l'invention concerne un filtre métallique susceptible d'être nettoyé périodiquement dans un bain corrosif tel qu'un bain d'acide nitrique chaud.

L'invention est particulièrement adaptée à la fabrication de filtres destinés à piéger des aérosols irradiants, dans l'industrie nucléaire. Elle peut cependant être mise en oeuvre dans de nombreux autres domaines industriels, dès lors que l'on désire fixer le bord d'un corps métallique poreux tel qu'un feutre métallique, un bloc fritté, etc. sur une pièce métallique massive.

Dans l'industrie nucléaire et notamment dans les usines de retraitement de déchets radioactifs, il est parfois nécessaire de filtrer de l'air fortement contaminé en aérosols de faible dimension (inférieure à 1 µm). A cet effet, on doit disposer de filtres de très haute efficacité, capables de résister à une irradiation élevée.

Pour satisfaire à ces exigences, on dispose actuellement de filtres dont le milieu filtrant est constitué de papier de fibres de verre. Cependant, ces filtres ne sont pas décontaminables. Lorsqu'ils sont colmatés, ils constituent donc des déchets solides supplémentaires dont le volume vient s'ajouter à celui des aérosols qu'ils ont piégés.

Dans le document FR-A-2 549 093, il est proposé un procédé pour nettoyer des filtres métalliques en acier inoxydable poreux. Ce procédé inclut notamment un rinçage des filtres à l'aide d'une solution aqueuse à base d'acide nitrique. Toutefois, ce document n'aborde pas le problème de la tenue du filtre à la corrosion lorsque l'élément filtrant doit être fixé de manière étanche sur des embouts métalliques, par exemple en acier inoxydable.

Par ailleurs, le document EP-A-0 307 909 montre qu'il est connu d'utiliser des filtres plissés en acier inoxydable fritté dans l'industrie nucléaire.

Le document US-A-5 098 454 décrit un filtre comprenant un corps métallique poreux fixé sur une pièce métallique par soudage.

Afin de réduire les déchets nucléaires, il apparaît souhaitable de pouvoir disposer de filtres susceptibles d'être nettoyés, notamment par une immersion dans l'acide nitrique chaud, de façon à permettre un traitement de l'effluent liquide issu de la décontamination du filtre et une réutilisation de ce dernier.

Cependant, l'obtention de ce résultat est contrecarré par l'absence de moyen connu pour fixer de façon étanche un corps métallique poreux sur une pièce métallique massive de façon telle que la liaison mécanique soit préservée et puisse résister à la corrosion engendrée par la décontamination du filtre dans une solution d'acide nitrique chaud, ce moyen de fixation devant en particulier, dans le cas de l'application du milieu nucléaire, résister à de fortes irradiations..

De façon générale, l'invention a pour objet un procédé permettant de fixer un corps métallique poreux sur une pièce métallique en préservant l'étanchéité et la tenue mécanique de la liaison, y compris lorsque celle-ci est en présence d'un milieu fortement corrosif tel qu'une solution d'acide nitrique chaud.

Conformément à l'invention, ce résultat est obtenu au moyen d'un procédé de fixation d'un corps métallique poreux sur une pièce métallique, caractérisé par le fait qu'il comprend les étapes suivantes :
- préparation de surfaces en vis-à-vis du corps métallique poreux et de la pièce métallique, de façon à limiter le jeu entre ces surfaces à une valeur au plus égale à environ 0,5 mm, lorsqu'elles sont en contact ;
- oxydation à l'air du corps métallique poreux, par chauffage de ce dernier ; et
- fixation du corps métallique poreux sur la pièce métallique par brasage, après mise en contact desdites surfaces.

En limitant le jeu entre le corps métallique poreux et la pièce métallique à une valeur maximale d'environ 0,5 mm et en oxydant le corps métallique poreux avant le brasage, on réalise une liaison mécanique étanche entre le corps métallique poreux et la pièce métallique.

Au contraire, des essais de brasage effectués avec un jeu mal contrôlé et sans oxydation du corps métallique poreux ont conduit à une liaison non satisfaisante, aussi bien du point de vue mécanique que du point de vue de l'étanchéité. Ce comportement non satisfaisant s'explique notamment par le fait que la brasure monte par capillarité dans le corps métallique poreux. Il s'explique aussi par le fait que la brasure en fusion réagit chimiquement avec le corps métallique poreux, ce qui se traduit par la formation locale de trous dans ce dernier.

Lorsqu'on désire en outre que la liaison ainsi réalisée résiste à la corrosion découlant par exemple d'une immersion des pièces dans de l'acide nitrique chaud, on effectue le brasage à l'aide d'une brasure à base nickel haute température.

Afin d'obtenir le jeu minimal souhaité entre les surfaces à relier, on prépare avantageusement la surface du corps métallique poreux en découpant le bord de ce corps par électroérosion à fils.

Le corps métallique poreux peut notamment être constitué par un feutre métallique ou par un bloc de métal fritté.

Avantageusement, le procédé selon l'invention est appliqué au cas où le corps métallique poreux est plié en accordéon et refermé sur lui-même, selon une section quelconque (circulaire, rectangulaire ou autre), pour former un élément filtrant dont les extrémités sont fixées sur des embouts métalliques constituant lesdites pièces, selon la technique de brasage précitée.

L'invention a donc aussi pour objet un filtre selon la revendication 6.

On décrira à présent, à titre d'exemple non limitatif, une forme de réalisation préférentielle de l'invention, en se référant aux dessins annexés, dans lesquels :
- la figure 1 est une vue en coupe longitudinale représentant schématiquement un filtre dans lequel l'élément filtrant est fixé sur les embouts par le procédé selon l'invention ;
- la figure 2 est une vue en coupe selon la ligne II-II de la figure 1 ; et
- la figure 3 est une vue en coupe transversale à plus grande échelle de l'élément filtrant.

Le procédé de fixation selon l'invention va à présent être décrit à la lumière d'un exemple qui concerne l'application de ce procédé à la fabrication d'un filtre à air destiné à piéger des aérosols irradiants de faible dimension (inférieure à 1 µm). Comme on l'a déjà indiqué, il peut toutefois être utilisé dans tout autre domaine, dès lors que le bord d'un corps métallique poreux doit être fixé sur une pièce métallique massive.

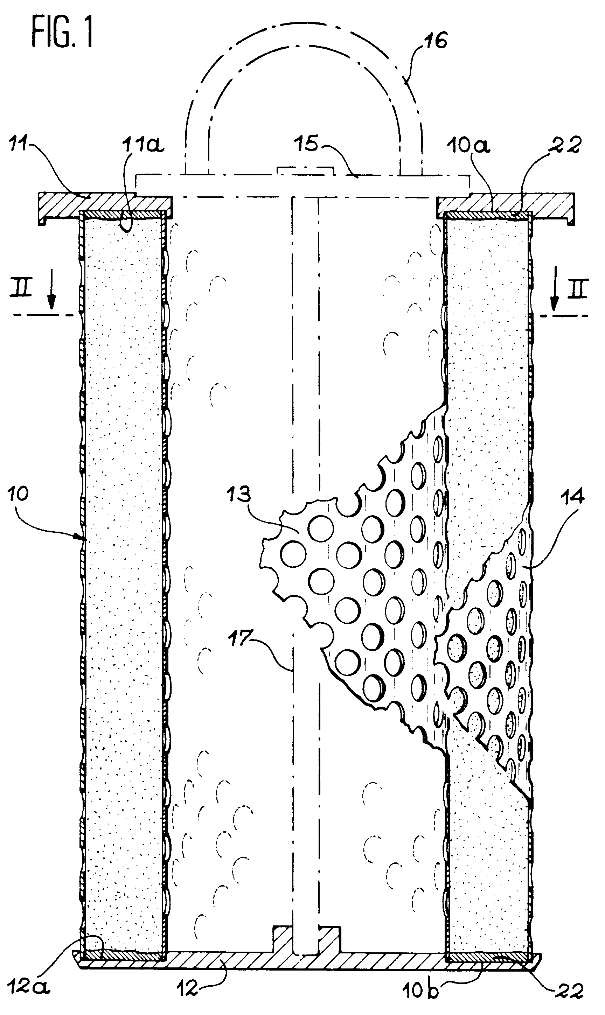

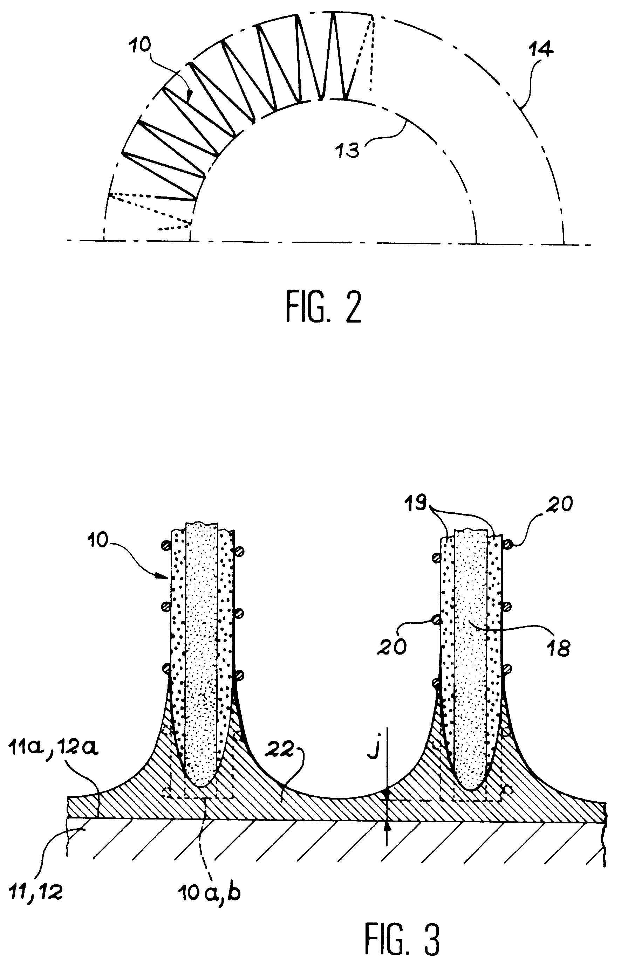

Les figures 1 et 2 représentent schématiquement le filtre que l'on se propose de réaliser, dans l'exemple décrit. Sur ces figures, la référence 10 désigne l'élément filtrant proprement dit. Cet élément filtrant 10 constitue un corps métallique poreux plié en accordéon et refermé sur lui-même selon une section qui, dans ce cas, est circulaire (figure 2). Chacune des extrémités de l'élément filtrant 10 est fixée de façon étanche sur un embout métallique 11,12 selon le procédé de l'invention.

Deux grilles 13,14 sont également placées entre les embouts 11,12, de part et d'autre de l'élément filtrant 10, pour en assurer la protection mécanique.

Comme on l'a illustré en traits mixtes sur la figure 1, une barrette 15 portant un anneau de manutention 16 est plaquée sur l'embout 11 par un tirant axial 17 dont l'extrémité opposée est vissée dans l'embout 12. Dans ce cas, l'embout est un disque fermé, alors que l'embout 11 est un disque percé en son centre d'un passage par lequel pénètre l'air à filtrer. Après avoir traversé l'élément filtrant 10, l'air ressort radialement du filtre. Une très bonne étanchéité de la liaison entre l'élément filtrant 10 et les embouts 11 et 12 est donc requise.

Chacun des embouts 11 et 12 est réalisé par exemple en acier inoxydable et comporte une face plane 11a, 12a sur laquelle la surface d'extrémité correspondante 10a, 10b de l'élément filtrant 10 est fixée par brasage.

Avant cette fixation et selon une technique connue, on donne à l'élément filtrant 10 la forme désirée. Pour cela, on part d'un corps métallique poreux de forme rectangulaire et on le plie en accordéon en le refermant sur lui-même, selon la section désirée. Il est à noter que cette forme peut être quelconque, la forme circulaire illustrée sur la figure 2 n'étant donnée qu'à titre d'exemple nullement limitatif. La fermeture de l'élément filtrant est assurée par une soudure bord à bord, selon une technique classique.

Lorsque cette phase préparatoire est terminée, le procédé de fixation selon l'invention peut être mis en oeuvre.

Une première phase de ce procédé consiste à préparer les surfaces en vis-à-vis des pièces à relier afin que le jeu j entre ces surfaces (figure 3) soit au plus égal à environ 0,5 mm lorsque celles-ci sont en contact.

Etant donné que les embouts 11 et 12 sont des pièces massives, un usinage des surfaces 11a et 12a selon des procédés d'usinage classiques assure une excellente planéité de ces surfaces.

En revanche, l'obtention d'une bonne planéité des surfaces d'extrémité 10a et 10b de l'élément filtrant 10 est plus délicate à obtenir, compte tenu du caractère poreux du matériau constituant cet élément filtrant. Une technique satisfaisante pour parvenir à ce résultat consiste à préparer les surfaces 10a et 10b de l'élément filtrant 10 en ayant recours à une découpe de ces surfaces d'extrémités par électroérosion à fils.

Des essais effectués sur un élément filtrant en feutre métallique formé de fibres d'acier inoxydable ayant un diamètre minimal de 2 µm ont démontré qu'un jeu inférieur à environ 0,5 mm pouvait être obtenu entre les surfaces 11a et 12a des embouts 11 et 12 et les surfaces 10a et 10b de l'élément filtrant 10 en découpant ce dernier selon la technique de la découpe par électroérosion à fils.

Lorsque cette découpe est terminée, une deuxième étape du procédé selon l'invention consiste à soumettre l'élément filtrant à un traitement thermique d'oxydation à l'air. Pour cela, l'élément filtrant 10 est placé dans un four selon le cycle thermique suivant : montée en température jusqu'à environ 500°C, palier d'environ 10 min à cette température, puis refroidissement lent.

Cette oxydation de l'élément filtrant 10 préalable au brasage va à l'encontre de la pratique habituelle dans ce domaine, qui impose au contraire une protection des pièces brasées vis-à-vis de l'oxydation. Cependant, on observe de façon surprenante que cette oxydation préalable permet de créer une brasure étanche qui remonte sur une faible distance (quelques mm) le long de l'élément filtrant 10. De plus, cette oxydation préalable empêche une attaque du matériau poreux constituant l'élément filtrant, évitant ainsi la formation de trous et la perte de l'étanchéité.

Il est rappelé que la bonne qualité de la fixation ainsi obtenue dépend toutefois du jeu qui existe entre les surfaces 10a et 10b de l'élément filtrant et les surfaces 11a et 12a des embouts 11 et 12. Plus précisément, l'étanchéité et la tenue mécanique ne sont assurées que lorsque ce jeu n'excède pas environ 0,5 mm.

Lorsque ces étapes préparatoires sont terminées, l'élément filtrant 10 peut être fixé par brasage sur les embouts métalliques 12 et 14 sans risque de rupture d'étanchéité ou de tenue mécanique insuffisante.

Pour effectuer cette fixation par brasage, la surface 11a, 12a de chacun des embouts 11 et 12 est amenée en contact contre la surface correspondante 10a, 10b de l'élément filtrant 10 et le brasage est réalisé selon les techniques usuelles, en contrôlant la température.

Afin de garantir la tenue à la corrosion du filtre ainsi fabriqué, on utilise comme brasure une brasure à base nickel haute température. A titre d'exemple non limitatif, la brasure "Nicrobraz 50" de la Société Wall Colmonoy peut être utilisée.

Grâce à la tenue à la corrosion du filtre ainsi fabriqué, il devient possible de réutiliser celui-ci après son nettoyage par immersion dans une solution d'acide nitrique chaud (par exemple à environ 75°C) pendant une durée suffisante pour assurer le nettoyage complet de l'élément filtrant (par exemple environ 48 h).

Selon un mode de réalisation préférentielle de l'invention et comme on l'a représenté plus en détail sur la figure 3, uniquement à titre d'exemple, l'élément filtrant 10 peut notamment être formé par la superposition de trois couches de feutre d'acier inoxydable.

Plus précisément, l'élément filtrant 10 comprend une couche centrale 18, constituée par un feutre d'acier inoxydable formé de fils d'acier très fins, dont le diamètre est par exemple compris entre 2 µm et 6 µm, dans l'application envisagée. Cette couche centrale 18, dont l'épaisseur est par exemple d'environ 220 µm, forme le filtre proprement dit.

La couche centrale 18 de l'élément filtrant 10 est placée entre deux couches superficielles 19, toutes deux formées d'un feutre d'acier inoxydable constitué de fils de plus gros diamètre, par exemple supérieur ou égal à environ 10 µm. L'épaisseur de chacune des couches superficielles 19 peut notamment être d'environ 80 µm. Ces couches superficielles 19 ont principalement pour fonction d'assurer la tenue mécanique de la couche centrale 18 lors du pliage de l'élément filtrant 10 en accordéon. On comprend aisément que l'utilisation d'une couche centrale 18 réalisée en un matériau de nature différente permet de supprimer les couches superficielles 19.

Comme on l'a également illustré sur la figure 3, l'élément filtrant 10 ainsi constitué est emprisonné entre deux grilles protectrices 20. Chacune de ces grilles peut notamment être réalisée en fils d'acier inoxydable tissés en formant une maille carrée. A titre d'exemple purement illustratif, le fil utilisé peut avoir un diamètre d'environ 0,14 mm et la taille de la maille peut être d'environ 0,52 mm.

Comme on l'a illustré à échelle agrandie sur la figure 3, la liaison assurée conformément à l'invention entre l'élément filtrant 10 et l'embout métallique 11 ou 12 est parfaitement étanche, du fait que la remontée de la brasure 22, par capillarité, le long de l'élément filtrant 10 est limitée à quelques millimètres grâce à l'oxydation préalable de l'élément filtrant, et aussi du fait que les surfaces d'extrémité 10a et 10b de l'élément filtrant 10 sont découpées de façon suffisamment précise pour que le jeu j entre ces surfaces et les surfaces 11a, 12a des embouts métalliques soit au plus égal 0,5 mm.

Enfin et comme on l'a déjà précisé, l'oxydation préalable de l'élément filtrant 10 empêche l'attaque du métal constituant cet élément par la brasure 22, de sorte que la formation de trous est évitée.

Bien entendu, le procédé de fixation selon l'invention, qui vient d'être décrit dans le cas particulier de la fabrication d'un filtre destiné à l'industrie nucléaire, peut être utilisé dans de nombreux autres domaines, dès lors que se pose le problème de la fixation étanche d'un corps métallique poreux sur une pièce métallique généralement massive.

## Revendications

1. Procédé de fixation d'un corps métallique poreux (10) sur une pièce métallique (11,12), caractérisé par le fait qu'il comprend les étapes suivantes :
- préparation de surfaces en vis-à-vis (10a,10b;11a,12a) du corps métallique poreux (10) et de la pièce métallique (11,12), de façon à limiter le jeu (j) entre ces surfaces à une valeur au plus égale à environ 0,5 mm, lorsqu'elles sont en contact ;
- oxydation à l'air du corps métallique poreux (10), par chauffage de ce dernier ; et
- fixation du corps métallique poreux (10) sur la pièce métallique (11,12) par brasage, après mise en contact desdites surfaces.

2. Procédé selon la revendication 1, caractérisé par le fait que la préparation de la surface (10a,10b) du corps métallique poreux (10) se fait par découpe par électroérosion à fils.

3. Procédé selon l'une quelconque des revendications précédentes, caractérisé par le fait qu'on effectue le brasage à l'aide d'une brasure (22) à base nickel haute température.

4. Procédé selon l'une quelconque des revendications précédentes, caractérisé par le fait que le corps métallique poreux (10) comprend un feutre métallique (18).

5. Procédé selon l'une quelconque des revendications précédentes, caractérisé par le fait que le corps métallique poreux (10) est plié en accordéon et refermé sur lui-même, pour former un élément filtrant dont on fixe les extrémités par brasage sur des embouts métalliques (11,12) constituant lesdites pièces.

6. Filtre comprenant un corps métallique poreux (10) formant élément filtrant, caractérisé par le fait qu'il comprend de plus des embouts métalliques (11,12) fixés de façon étanche sur les extrémités du corps métallique poreux (10), par le procédé selon l'une quelconque des revendications précédentes.

## Claims

1. Method of fixing a porous metal body (10) to a metal piece (11,12), characterized in that it comprises the following steps:
- preparation of the facing surfaces (10a, 10b; 11a, 12a) of the porous metal body (10) and of the metal piece (11, 12) so as to limit the clearance (j) between these surfaces to a value at most equal to approximately 0.5 mm when they are in contact;
- oxidation in air of the porous metal body (10) by heating the latter; and
- fixing of the porous metal body (10) to the metal piece (11, 12) by brazing, after the said surfaces are brought into contact.

2. Method according to Claim 1, characterized in that the surface (10a, 10b) of the porous metal body (10) is prepared by electrical discharge wire cutting.

3. Method according to either of the preceding claims, characterized in that the brazing is carried out using a nickel-based high-temperature braze (22).

4. Method according to any one of the preceding claims, characterized in that the porous metal body (10) comprises a metal felt (18).

5. Method according to any one of the preceding claims, characterized in that the porous metal body (10) is folded in concertina fashion and closed up on itself in order to form a filtering element, the ends of which are fixed by brazing to the metal end fittings (11, 12) constituting the said pieces.

6. Filter comprising a porous metal body (10) forming the filtering element, characterized in that it additionally comprises metal end fittings (11, 12) which are fixed in a sealed manner to the ends of the porous metal body (10) by the method according to any one of the preceding claims.

## Patentansprüche

1. Verfahren zur Befestigung eines metallischen Körpers (10) an einem Metallteil (11, 12),
**dadurch gekennzeichnet,**
daß es die folgenden Schritte umfaßt:
- Vorbereitung von sich gegenüberstehenden Oberflächen (10a,10b; 11a,12a) des porösen metallischen Körpers (10) und des Metallteils (11,12), um das Spiel (j) zwischen diesen Flächen auf einen Wert von höchstens gleich 0,5mm zu begrenzen, wenn sie in Kontakt sind;
- Oxididation an Luft des porösen metallischen Körpers (10) durch Erwärmung dieses letzteren; und
- Befestigung des porösen metallischen Körpers (11,12) durch Lötung, nach Kontaktherstellung zwischen den genannten Oberflächen.

2. Verfahren nach Anspruch 1, dadurch gekennzeichnet, daß die Vorbereitung der Oberfläche (10a,10b) des porösen metallischen Körpers (10) durch Abtragen bez. Schneiden mittels Elektroerosion mit Draht erfolgt.

3. Verfahren nach einem der vorangehenden Ansprüche, dadurch gekennzeichnet, daß man das Löten ausführt mit Hilfe einer Hochtemperaturlötung (22) auf Nickelbasis.

4. Verfahren nach einem der vorangehenden Ansprüche, dadurch gekennzeichnet, daß der poröse metallische Körper (10) einen Metallfils (18) enthält.

5. Verfahren nach einem der vorangehenden Ansprüche, dadurch gekennzeichnet, daß der poröse metallische Körper (10) akkordeonartig gefaltet und in sich selbst geschlossen ist, um ein Filtrierelement zu bilden, dessen Enden man durch Lötung an den die genannten Teile bildenden metallischen Ansatzstücken (11,12) befestigt.

6. Filter, einen das filtrierende Element bildenden porösen metallischen Körper (10) umfassend,
**dadurch gekennzeichnet,**
daß es außerdem metallische Ansatzstücke (11,12) umfaßt, die durch das Verfahren nach einem der vorangehenden Ansprüche auf dichte Weise an den Enden des porösen metallischen Körpers (10) befestigt sind.
